(19) Europäisches Patentamt
European Patent Office
Office européen des brevets

(11) EP 1 925 838 B1

(12) EUROPEAN PATENT SPECIFICATION

(45) Date of publication and mention
of the grant of the patent:
**31.05.2017 Bulletin 2017/22**

(51) Int Cl.:
*F16D 3/84* (2006.01)   *F16J 3/04* (2006.01)
*F16J 15/52* (2006.01)

(21) Application number: **06797789.2**

(22) Date of filing: **11.09.2006**

(86) International application number:
**PCT/JP2006/317963**

(87) International publication number:
**WO 2007/032301 (22.03.2007 Gazette 2007/12)**

(54) **BOOT FOR CONSTANT VELOCITY UNIVERSAL JOINT**

MANSCHETTE FÜR HOMOKINETISCHE KUPPLUNG

SOUFFLET DETINÉ À UN JOINT UNIVERSEL À VITESSSE CONSTANTE

(84) Designated Contracting States:
**AT BE BG CH CY CZ DE DK EE ES FI FR GB GR HU IE IS IT LI LT LU LV MC NL PL PT RO SE SI SK TR**

(30) Priority: **16.09.2005 JP 2005270358**

(43) Date of publication of application:
**28.05.2008 Bulletin 2008/22**

(73) Proprietor: **NTN Corporation**
**Osaka-shi, Osaka 550-0003 (JP)**

(72) Inventors:
• **UENO, Tsuyoshi**
**Iwata-shi**
**Shizuoka, 438-8510 (JP)**
• **TOMIYAMA, Mikio**
**Iwata-shi**
**Shizuoka, 438-8510 (JP)**
• **HARADA, Shintaro**
**Iwata-shi**
**Shizuoka, 438-8510 (JP)**

• **OOSUMI, Tomonari**
**Iwata-shi**
**Shizuoka, 438-8510 (JP)**
• **TAKEMURA, Atsuto**
**Iwata-shi**
**Shizuoka, 438-8510 (JP)**

(74) Representative: **Mischung, Ralf et al**
**Eder Schieschke & Partner mbB**
**Patentanwälte**
**Elisabethstraße 34/II**
**80796 München (DE)**

(56) References cited:
EP-A- 0 669 477       DE-A1- 10 207 532
DE-A1- 19 844 987     GB-A- 2 295 438
JP-A- 04 160 229      JP-A- 08 135 675
JP-A- 2002 257 152    US-A- 4 730 834
US-A- 5 645 286

**Description**

TECHNICAL FIELD

The present invention relates to a boot for a constant velocity universal joint. In particular, the present invention relates to a boot for a constant velocity universal joint used for power transmission in automobiles and various industrial machineries.

BACKGROUND ART

A bellows-like boot is attached to a constant velocity universal joint used for power transmission in automobiles and various industrial machineries. The bellows-like boot aims to prevent ingress of foreign objects, such as dust, into an interior of the joint and leakage of grease enclosed in the interior of the joint. A resin boot made from a thermoplastic elastomer is recently being used.

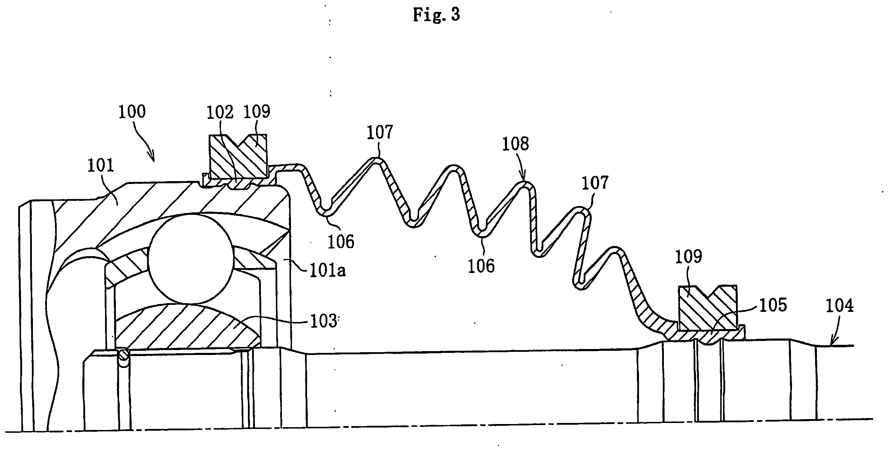

As shown in Fig. 3, this type of boot includes a large diameter section 102, a small diameter section 105, and a bellows section 108. The large diameter section 102 is fixed onto an outer ring 101 of a constant velocity universal joint 100. The small diameter section 105 is fixed onto a shaft 104 that extends from an inner ring 103. The bellows section 108 is provided between the large diameter section 102 and the small diameter section 105. Alternating valleys 106 and peaks 107 are formed in the bellows section 108. The large diameter section 102 and the small diameter section 105 are respectively fixed by a boot band 109 being fitted onto the large diameter section 102 and the small diameter section 105.

When the boot is attached to the constant velocity universal joint 100, in an unbent joint state (a state in which an axial center of the shaft 104 and an axial center of the outer ring 101 are the same), a valley 106 closest to the large diameter section 102 is not in contact with the outer ring 101. However, when the boot is used in a bent joint state (a state in which the axial center of the shaft 104 is at an angle to the axial center of the outer ring 101), the valley 106 closest to the large diameter section 102 may become caught between an opening end section and the shaft 104 at an opening section 101a of the outer ring 101 and become damaged. When the boot is damaged, the boot cannot function as a boot, thereby requiring replacement or the like. Therefore, in a conventional boot such as that shown in Fig. 3, a diameter of the valley 106 is required to be large to prevent the valley 106 from becoming caught between the opening end section and the shaft 104.

As a boot in which the valley 106 is prevented from becoming caught, there is a boot in which a cylindrical section is provided between the large diameter section and the bellows section (Patent Document 1). In other words, as shown in Fig. 4, a cylindrical section 111 having a larger inner diameter dimension than an outer diameter dimension of the outer ring 101is provided between the large diameter section 102 and the bellows section 108. A thickness of the cylindrical section 111 is thicker than a thickness of the bellows section 108. As a result of the cylindrical section 111 being provided, a distance is provided between the bellows section 108 and the opening section 101a of the outer ring 101, thereby preventing the valley 106 from becoming caught.

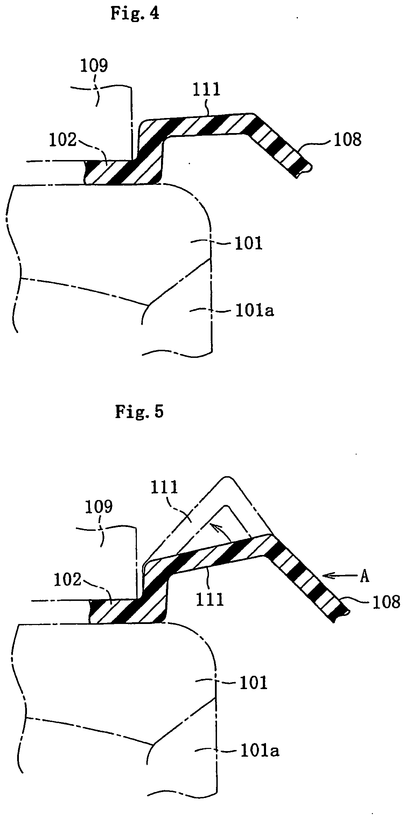

Moreover, as shown in Fig. 5, there is a boot in which the diameter of the cylindrical section 111 is successively widened from the large diameter section 102 side towards the small diameter section 105 side. In this case, when a force in an arrow direction A is received from the bellows section 108 when the joint is bent, the boot flexes in an outer radial direction, as indicated by a phantom line, thereby preventing the valley 106 from becoming caught.

There is also a boot in which various boot thicknesses are set to prevent friction caused by rubbing within the bellows section in the bent joint state, thereby achieving enhancement in abrasion resistance (Patent Document 2 and Patent Document 3). There is also a boot that bends in adherence to the bending of the joint, thereby preventing damage and achieving an enhancement in fatigability from flexing (Patent Document 4, Patent Document 5, Patent Document 6, and Patent Document 7).

Patent Document 1: Japanese Utility Model Application Publication No. 2525619
Patent Document 2: Japanese Utility Model Laid-Open Publication No. Heisei 7-10561
Patent Document 3: Japanese Utility Model Laid-Open Publication No. Heisei 6-82463
Patent Document 4: Japanese Patent Laid-open Publication No. 2002-257152
Patent Document 5: Japanese Patent Laid-open Publication No. Heisei 6-129536
Patent Document 6: Japanese Patent Laid-open Publication No. Heisei 8-135675
Patent Document 7: Japanese Utility Model Laid-Open Publication No. Heisei 7-38758

From US 5,645,286, a bellows portion of a resin boot for a constant velocity universal joint is known. The boot comprises six peaks and five intermediate troughs, where a certain range of thickness is given for each peak and trough of the boot.

DE 19844987 A1 teaches a universal joint, where an open section of the joint receives a shaft, and where a boot is fastened on the outer element of the joint and extends down to a section of the shaft. The ranges of thickness together with the mean values on the peaks and troughs of the boot are given in order to optimize the sealing effects of the boot.

DISCLOSURE OF THE INVENTION

PROBLEMS TO BE SOLVED BY THE INVENTION

When the diameter of the valley 106 is large, the peak 107 is required to be designed to be higher to ensure bellows length (bellows film length). Therefore, a maximum outer diameter of the bellows section increases, thereby causing a spatial disadvantage.

In Patent Document 1, an axial direction length of the cylindrical section 111 is required to be relatively long. Therefore, an axial direction length of the entire boot increases. As a result, the numbers and disposal pitches of valleys 106 and peaks 107 in the bellows section 108 may be restricted, and flexibility and stretchability may deteriorate.

In the boots described in Patent Document 2, Patent Document 3 and the like, abrasion resistance is enhanced. In Patent Document 4 to Patent Document 7 and the like, fatigability from flexing is enhanced, thereby extending life of the boot. Therefore, a boot such as those described in these Patent Documents and the like cannot prevent the bellows section from becoming caught in the outer ring opening section.

The present invention provides a boot for a constant velocity universal joint that is compact in shape and can prevent a bellows section from becoming caught in an outer ring opening section.

MEANS FOR SOLVING THE PROBLEMS

A boot for a constant velocity universal joint of the present invention includes a large diameter section that is attached to an opening end section of an outer joint component of a constant velocity universal joint, a small diameter section that is attached to a shaft connected to an inner joint component of the constant velocity universal joint, and a bellows section that is provided between the large diameter section and the small diameter section and has peaks and valleys alternately disposed in an axial direction. In the boot for a constant velocity universal joint, a peak is provided adjacent to the large diameter section and to the small diameter section. With a peak and valley of an axial direction center section as reference, thicknesses of peaks and valleys to the small diameter section side of the reference peak and valley are thinner than reference thickness of the reference peak and valley and thicknesses of peaks and valleys to the large diameter section side of the reference peak and valley are thicker than the reference thickness of the reference peak and valley except the thickness of the peak (16g) adjacent to the large diameter section (11). The thickness of the peak adjacent to the large diameter section is the reference thickness.

A peak is provided adjacent to the large diameter section and to the small diameter section. As a result, when the boot is used in a bent joint state (a state in which an axial center of the shaft is at an angle to an axial center of the outer ring), a valley closest to the large diameter section can be displaced such as to prevent becoming caught between an opening end section of the outer ring and the shaft.

To prevent catching, the thicknesses of the peaks thicker than the reference thickness are preferably thicker than the thicknesses of the valleys thicker than the reference thickness. For example, the bellows section has seven peaks and six valleys, and third peak and valley from the small diameter section are the reference.

The thicknesses of the peaks and valleys can be increased or decreased within a range of 85% to 115%. In this case, a difference between the thicknesses m and r of two arbitrarily selected peaks 16 and valleys 17 is preferably kept constant.

A thermoplastic elastomer of an ester series, olefin series, urethane series, amide series, styrene series, and the like can be used as a boot material.

ADVANTAGE OF THE INVENTION

The present invention can prevent the valley of the bellows section from becoming caught between the opening end section of the opening section of the outer ring and the shaft. As a result, damage to the bellows section caused by jamming on the joint side can be prevented. The boot can function as a boot for a long period of time. Because jamming is prevented, the outer diameter dimension is not required to be large. An interference range with peripheral devices can be reduced. Freedom in boot design increases. A design can be made in which the diameter of the valley closest to the large diameter section (position closest to the large diameter section) is made smaller than (lowered from) a track section diameter of the outer ring and a bellows length (bellows film length) is secured. A design having overall compactness in the radial direction and the axial direction can be made.

The thicknesses of the peaks and valleys can be increased or decreased within the range of 85% to 115%. Therefore, high dimensional accuracy is not really required, and simplification of manufacturing can be achieved.

Because the boot material is a thermoplastic elastomer, the constant velocity universal joint boot 1 has superior strength and is advantageous in terms of abrasion resistance.

BRIEF DESCRIPTION OF THE DRAWINGS

Fig. 1 is a cross-sectional view of a state in which a constant velocity universal joint boot according to an embodiment of the present invention is attached to a constant velocity universal joint;

Fig. 2 is an enlarged cross-sectional view of main components of the constant velocity universal joint boot;

Fig. 3 is a cross-sectional view of a state in which a conventional constant velocity universal joint boot is attached to a constant velocity universal joint;

Fig. 4 is a cross-sectional view of main components of a conventional catching prevention mechanism for the constant velocity universal joint boot; and

Fig. 5 is a cross-sectional view of another conventional catching prevention mechanism for the constant velocity universal joint boot.

BEST MODE FOR CARRYING OUT THE INVENTION

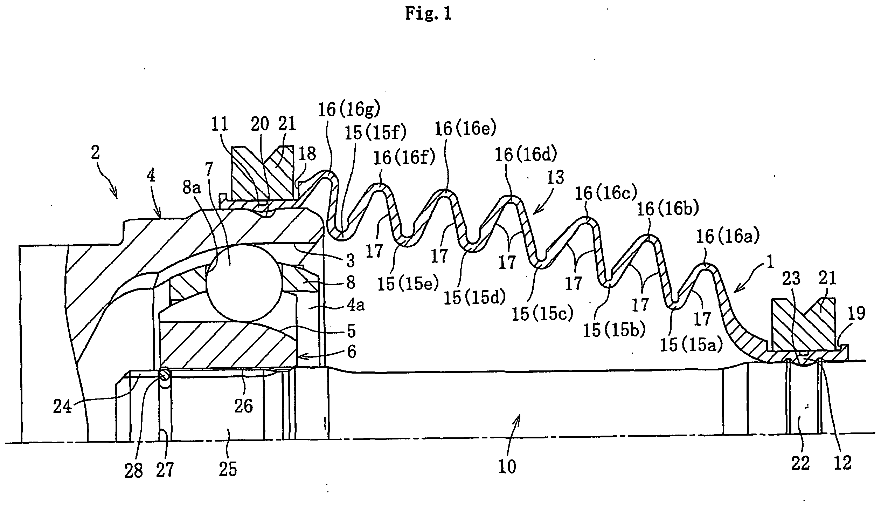

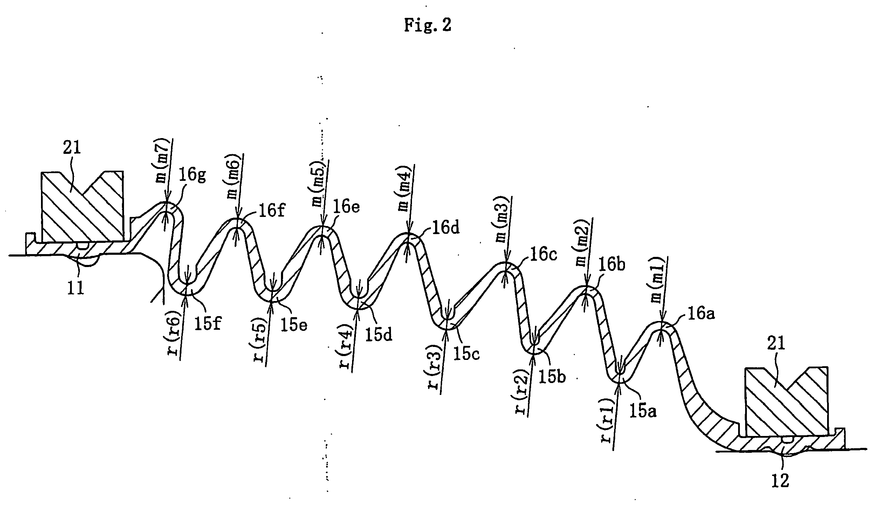

An embodiment of the present invention will be hereinafter described with reference to Fig. 1 and Fig. 2.

A constant velocity universal joint boot 1 is attached to a constant velocity universal joint 2, as shown in Fig. 1. The constant velocity universal joint 2 includes an outer joint member (outer ring) 4, an inner joint member (inner ring) 6, a plurality of balls 7, a holder 8, and the like. A plurality of guiding grooves (track grooves) 3 are formed on an inner circumferential surface of the outer ring 4 in an axial direction. A plurality of guiding grooves (track grooves) 5 are formed on an outer circumferential surface of the inner ring 6. The balls 7 are placed on ball tracks formed through coordination between the guiding grooves 3 of the outer ring 4 and the guiding grooves 5 of the inner ring 6. The holder 8 has pockets 8a for storing the balls 7.

A shaft 10 is connected to an inner circumference of the inner ring 6, via a torque transmitting means, such as serration or a spline. In other words, a spline forming section 25 on which a spline 24 is formed is provided on an end section of the shaft 10. As a result of the spline forming section 25 being inserted into a center hole of the inner ring 6, the spline 24 of the shaft 10 and a spline 26 formed on an inner circumferential surface of the inner ring 6 are engaged. A stopper ring groove 27 is formed on the spline forming section 25 within an axial direction range of the spline 24. A stopper ring 28 is engaged with the stopper ring groove 27, forming a dislocation stopping mechanism.

The constant velocity universal joint 2 is merely required to be that to which the constant velocity universal joint boot 1 can be attached. Therefore, various kinds of constant velocity universal joints can be used, for example, fixed constant velocity universal joints such as a Rzeppa-type or a Birfield-type, or slide-type constant velocity universal joints such as a double-offset-type, a tri-port-type, or a cross-groove-type.

The constant velocity universal joint boot 1 (sometimes referred to, hereinafter, as simply boot 1) is formed by, for example, a thermoplastic elastomer of an ester series, olefin series, urethane series, amide series, styrene series, and the like. The thermoplastic elastomer has characteristics that are between plastic and rubber. While the thermoplastic elastomer is a rubber elastic body, the thermoplastic elastomer can be processed by an ordinary thermoplastic resin molding machine. The thermoplastic elastomer has advantages such as having self-reinforcement properties, having sufficient strength without use of reinforcing materials, not requiring a vulcanizing procedure during ordinary rubber molding, and furthermore, achieving simplified composition.

The constant velocity universal joint boot 1 is formed from a cylindrical body and includes a large diameter section 11, a small diameter section 12, and a bellows section 13. The large diameter section 11 is fixed onto the outer ring 4. The small diameter section 12 is fixed onto the shaft 10 extending from the inner ring 6. The bellows section 13 is provided between the large diameter section 11 and the small diameter section 12. A plurality of valleys 15 and peaks 16 are alternately disposed in the bellows section 13 along an axial direction. Therefore, the boot 1 is provided with flexibility and stretchability in the axial direction. A valley 15 and a peak 16 are connected by a sloping section 17.

A ring-shaped engaging groove 20 is formed in a circumferential direction on an outer circumferential surface on an opening side of the outer ring 4. The large diameter section 11 of the boot 1 is fitted outside of the opening side of the outer ring 4 such as to cover the engaging groove 20. A boot band 21 is fitted and attached to a fitting groove 18 formed on an outer circumferential surface of the large diameter section 11, thereby fixing the large diameter section 11 onto the outer ring 4.

A boot attaching section 22 is provided in a position on the shaft 10 that projects from the outer ring 4 by a predetermined amount. The boot attaching section 22 has a ring-shaped engaging groove 23 along the circumferential direction. The small diameter section 12 of the boot 1 is fitted outside of the boot attaching section 22 such as to cover the engaging groove 23. The boot band 21 is fitted and attached to a fitting groove 19 formed on an outer circumferential surface of the small diameter section 12, thereby fixing the small diameter section 12 onto the shaft 10.

The bellows section 13 of the boot 1 has seven peaks 16 and six valleys 15. Therefore, the peak 16 is provided adjacent to the large diameter section 11 and to the small diameter section 12. The peaks 16 from the small diameter section 12 towards the large diameter section 11 are sequentially referred to as a first peak 16a, a second peak 16b, a third peak 16c, a fourth peak 16d, a fifth peak 16e, a sixth peak 16f, and a seventh peak 16g. The valleys 15 are sequentially referred to as a first valley 15a, a second valley 15b, a third valley 15c, a fourth valley 15d, a fifth valley 15e, and a sixth valley 15f.

In the bellows section 13, with the peak and valley 16 and 15 in an axial direction center section as reference, thicknesses m and r (see Fig. 2) of the peaks and valleys 16 and 15 to the small diameter section 12 side of the reference peak and valley 16 and 15 are thinner than a reference thickness of the reference peak and valley 16 and 15. Thicknesses of the peaks and valleys 16 and 15 to the large diameter section 11 side of the reference peak and valley 16 and 15 are thicker than the reference thickness, except the thickness of the peak (16g) adjacent to the large diameter section (11). Furthermore, a thickness m of the peak 16 (seventh peak 16g) adjacent to the large diameter section 11 is the reference thickness.

Specifically, the thickness m of each peak 16 and the thickness r of each valley 15 are set as shown in a following Table 1. In Table 1, A indicates the reference thickness. A can be arbitrarily set depending on a boot material being used and the like. A thickness m3 of the third peak 16c and a thickness r3 of the third valley 15c are the reference thickness.

[Table 1]

| First Peak 16a | A-0. 15mm | First Valley 15a | A-0. 15mm |
|---|---|---|---|
| Second Peak 16b | A-0. 15mm | Second Valley 15b | A-0. 15mm |
| Third Peak 16c | Λ | Third Valley 15c | Λ |
| Fourth Peak 16d | A+0. 1mm | Fourth Valley 15d | A+0. 1mm |
| Fifth Peak 16e | Λ+0. 15mm | Fifth Valley 15e | Λ+0. 1mm |
| Sixth Peak 16f | A+0. 15mm | Sixth Valley 15f | A+0. 1mm |
| Seventh Peak 16g | A | | |

Thickness m1 of the first peak 16a and thickness m2 of the second peak 16b are each about 0.15 millimeters thinner than the reference thickness A. Thickness m4 of the fourth peak 16d is about 0.1 millimeters thicker than the reference thickness A. Thickness m5 of the fifth peak 16e and thickness m6 of the sixth peak 16f are each about 0.15 millimeters thicker than the reference thickness A. Thickness m7 of the seventh peak 16g is the reference thickness A.

Thickness r1 of the first valley 15a and thickness r2 of the second valley 15b are each about 0.15 millimeters thinner than the reference thickness A. Thickness r4 of the fourth valley 15d, thickness r5 of the fifth valley 15e, and thickness r6 of the sixth valley 15f are each about 0.1 millimeters larger than the reference thickness A.

In this way, the peak 16 is provided adjacent to the large diameter section 11 and to the small diameter section 12. With the peak and valley 16 and 15 in the axial direction center section as the reference, the thicknesses of the peaks and valleys 16 and 15 to the small diameter section 12 side of the reference peak and valley 16 and 15 are thinner than the reference thickness of the reference peak and valley 16 and 15. The thicknesses of the peaks and valleys 16 and 15 to the large diameter section 11 side of the reference peak and valley 16 and 15 are thicker than the reference thickness. In addition, the thickness of the peak adjacent to the large diameter section is the reference thickness. As a result, when the boot is used in the bent joint state (the state in which the axial center of the shaft is at an angle to the axial center of the outer ring), the valley 15 closest to the large diameter section 11 can be displaced such as to prevent becoming caught between an opening end section 4a of the outer ring 4 and the shaft 10.

As a result of the thicknesses m and r of the peaks and valleys 16 and 15 being set as shown in Table 1, the valley 15 of the bellows section 13 can be prevented from becoming caught between the opening end section 4a of the outer ring 4 and the shaft 10 in the bent joint state. Therefore, damage to the bellows section 13 caused by jamming on the joint side can be prevented. The boot can function as a boot for a long period of time. Because jamming is prevented, the outer diameter dimension is not required to be large. An interference range with peripheral devices can be reduced. Freedom in boot design increases. A design can be made in which the diameter of the valley 15 closest to the large diameter section (position closest to the large diameter section) is made smaller than (lowered from) a track section diameter of the outer ring 4 and a bellows length (bellows film length) is secured. A design having overall compactness in the radial direction and the axial direction can be made.

Because the boot material is a thermoplastic elastomer, the constant velocity universal joint boot 1 has superior strength and is advantageous in terms of abrasion resistance.

The thickness m and r of the peaks and valleys 16 and 15 can be increased or decreased within a range of 85% to 115%. In this case, a difference between the thicknesses m and r of two arbitrarily selected peaks 16 and valleys 17 is preferably kept constant.

In other words, when the thicknesses m and r are increased or decreased and the thicknesses m and r set as shown in Table 1 are used as reference, when, for example, the thicknesses m and r reduced to 85%, the reference thicknesses m and r, and the thicknesses m and r increased to 115% are compared, a difference in the thicknesses of two arbitrary peaks 16 and valleys 15 regarding the thicknesses m and r that are reduced to 85%, a difference in the thicknesses of two arbitrary peaks 16 and valleys 15 regarding the reference thicknesses m and r, and a difference in the thicknesses of two arbitrary peaks 16 and valleys 15 regarding the thicknesses m and r that are increased to 115% are each set to be the same.

Specifically, when the thickness of the first peak 16a is m11, the thickness of the second peak 16b is m12, and so on such that a thickness of an n-th peak 16n is m1n regarding the reference thicknesses m and r, when the thickness of the first peak 16a is m21, the thickness of the second peak 16b is m22, and so on such that a thickness of an n-th peak 16n is m2n regarding the thicknesses m and r that are reduced to 85%, and when the thickness of the first peak 16a is m31, the thickness of the second peak 16b is m32, and so on such that a thickness of an n-th peak 16n is m3n regarding the thicknesses m and r that are increased to 115%, a relationship in a following Equation 1 is realized.

[Equation 1]

$$m11 - m12 \fallingdotseq m21 - m22 \fallingdotseq m31 - m32,$$
$$\cdots\cdots, m11 - m1n \fallingdotseq m21 - m2n \fallingdotseq m31 - m3n$$

In addition, when the thickness of the first valley 15a is r11, the thickness of the second valley 15b is r12, and so on such that a thickness of an n-th valley 15n is r1n regarding the reference thicknesses m and r, when the thickness of the first valley 15a is r21, the thickness of the second valley 15b is r22, and so on such that a thickness of an n-th valley 15n is r2n regarding the thicknesses m and r that are reduced to 85%, and when the thickness of the first valley 15a is r31, the thickness of the second valley 15b is r32, and so on such that a thickness of an n-th valley 15n is r3n regarding the thicknesses m and r that are increased to 115%, a relationship in a following Equation 2 is realized.

[Equation 2]

$$r11 - r12 \fallingdotseq r21 - r22 \fallingdotseq r31 - r32,$$
$$\cdots\cdots, r11 - r1n \fallingdotseq r21 - r2n \fallingdotseq r31 - r3n$$

In this way, the thicknesses of the peaks and valleys can be increased or decreased within the range of 85% to 115%. Even when the thicknesses are increased or decreased, the valley 15 of the bellows section 13 can be prevented from becoming caught between the opening end section 4a of the outer ring 4 and the shaft 10 in the bent joint state. Therefore, in the boot 1, high dimensional accuracy is not really required, and simplification of manufacturing can be achieved. To prevent the boot 1 from getting caught (jammed), the difference between the thicknesses m and r of two arbitrarily selected peaks 16 and valleys 15 is preferably kept constant.

When the boot 1 is configured as shown in Table 1, jamming can be effectively prevented. However, jamming cannot be prevented when the thicknesses m and r are set as shown in Table 2 and Table 3.

[Table 2]

| First Peak 16a | A | First Valley 15a | A |
|---|---|---|---|
| Second Peak 16b | A | Second Valley 15b | A |

(continued)

| Third Peak 16c | Λ | Third Valley 15c | Λ |
|---|---|---|---|
| Fourth Peak 16d | A | Fourth Valley 15d | A |
| Fifth Peak 16e | Λ+0. 05mm | Fifth Valley 15e | Λ |
| Sixth Peak 16f | A+0. 05mm | Sixth Valley 15f | A |
| Seventh Peak 16g | A | | |

[Table 3]

| First Peak 16a | A-0. 1mm | First Valley 15a | A-0. 1mm |
|---|---|---|---|
| Second Peak 16b | A-0. 1mm | Second Valley 15b | A-0. 1mm |
| Third Peak 16c | Λ | Third Valley 15c | Λ |
| Fourth Peak 16d | A | Fourth Valley 15d | A+0. 1mm |
| Fifth Peak 16e | Λ+0. 05mm | Fifth Valley 15e | Λ+0. 1mm |
| Sixth Peak 16f | A+0. 05mm | Sixth Valley 15f | A+0. 1mm |
| Seventh Peak 16g | A | | |

In other words, in the settings shown in Table 2, the fifth peak 16e and the sixth peak 16f are set to be about 0.05 millimeters thicker than the reference thickness A. The thicknesses m and r of other peaks 16 and valleys 15 are set to be the reference thickness A.

In the settings shown in Table 3, the third peak 16c, the fourth peak 16d, the seventh peak 16g, and the third valley 15c are set to be the reference thickness A. The first peak 16a, the second peak 16b, the first valley 15a, and the second valley 15b are set to be about 0.1 millimeters thinner than the reference thickness A. The fifth peak 16e and the sixth peak 16f are set to be about 0.05 millimeters thicker than the reference thickness A. The fourth valley 15d, the fifth valley 15e, and the sixth valley 16f are set to be about 0.1 millimeters thicker than the reference thickness A.

The boot material is preferably a thermoplastic elastomer. However, the boot material can be other kinds of resin or rubber. In this case, a material having moderate flexibility, strength, sealing properties, and durability is preferably selected.

The increase and decrease of the number of peaks and valleys 16 and 15 are arbitrary. The peak and valley 16 and 15 to be the reference is not limited to the third peak and valley 16 and 15.

Claims

1. A resin boot (1) for a constant velocity universal joint (2) comprising: a large diameter section (11) that is attachable to an opening end section of an outer joint component (4) of a constant velocity universal joint (2), a small diameter section (12) that is attachable to a shaft (10) connected to an inner joint component (6) of the constant velocity universal joint (2), and a bellows section (13) that is provided between the large diameter section (11) and the small diameter section (12) and has peaks (16) and valleys (15) alternately disposed in an axial direction, wherein a peak (16g, 16a) is provided adjacent to the large diameter section (11) and to the small diameter section (12), **characterized in that,** with a peak and valley of an axial direction center section as reference, thicknesses (m, r) of peaks (16) and valleys (15) to the small diameter section side of the reference peak and valley are thinner than reference thickness of the reference peak, and valley and thicknesses (m, r) of peaks (16) and valleys (15) to the large diameter section side of the reference peak and valley, except the thickness of the peak (16g) adjacent to the large diameter section (11), are thicker than the reference thickness of the reference peak and valley, and the thickness of the peak (16g) adjacent to the large diameter section (11) is the reference thickness.

2. The boot (1) for a constant velocity universal joint according to claim 1, wherein the thicknesses (m) of the peaks (16) thicker than the reference thickness are thicker than the thicknesses (r) of the valleys (15) thicker than the reference thickness.

3. The boot (1) for a constant velocity universal joint according to claim 1 or 2, wherein the bellows section (13) has seven peaks and six valleys, and third peak (16c) and valley (15c) from the small diameter section (12) are the reference.

4. The boot for a constant velocity universal joint according to any one of claims 1 to 3, wherein the thicknesses (m, r) of the peaks (16) and valleys (15) are increased or decreased within a range of 85% to 115%.

5. The boot (1) for a constant velocity universal joint according to claim 4, wherein a difference between the thicknesses (m, r) of two arbitrarily selected peaks (16) and valleys (15) is kept constant, and the thicknesses (m, r) of the peaks and valleys are increased or decreased within the range of 85% to 115%.

6. The boot (1) for a constant velocity universal joint (2) according to any one of claims 1 to 5, wherein a boot material is a thermoplastic elastomer of an ester series, olefin series, urethane series, amide series, styrene series, and the like.

**Patentansprüche**

1. Harzschutzmanschette (1) für ein Gleichlaufgelenk (2), mit: einem Abschnitt (11) großen Durchmessers, der an einem sich öffnenden Endabschnitt eines äußeren Gelenkbestandteils (4) eines Gleichlaufgelenks (2) anbringbar ist, einem Abschnitt (12) kleinen Durchmessers, der an einer Welle (10) anbringbar ist, die mit einem inneren Gelenkbestandteil (6) des Gleichlaufgelenks (2) verbunden ist, und einem Faltenbalgabschnitt (13), der zwischen dem Abschnitt (11) großen Durchmessers und dem Abschnitt (12) kleinen Durchmessers vorgesehen ist und Erhebungen (16) sowie Vertiefungen (15) besitzt, die in einer axialen Richtung abwechselnd angeordnet sind, wobei eine Erhebung (16g, 16a) neben dem Abschnitt (11) großen Durchmessers und dem Abschnitt (12) kleinen Durchmessers vorgesehen ist,
**dadurch gekennzeichnet, dass,**
mit einer Erhebung und einer Vertiefung eines mittigen Abschnitts in axialer Richtung als Bezugswert, Dicken (m, r) der Erhebungen (16) und Vertiefungen (15) zur Seite des Abschnitts kleinen Durchmessers der Bezugserhebung und -vertiefung hin geringer sind als die Bezugsdicke der Bezugserhebung und -vertiefung, und Dicken (m, r) der Erhebungen (16) und Vertiefungen (15) zur Seite des Abschnitts großen Durchmessers der Bezugserhebung und -vertiefung hin, mit Ausnahme der Dicke der Erhebung (16g) neben dem Abschnitt (11) großen Durchmessers, dicker sind als die Bezugsdicke der Bezugserhebung und -vertiefung, und
dass die Dicke der Erhebung (16g) neben dem Abschnitt (11) großen Durchmessers die Bezugsdicke ist.

2. Schutzmanschette (1) für ein Gleichlaufgelenk nach Anspruch 1, bei der die Dicken (m) der Erhebungen (16), die dicker sind als die Bezugsdicke, dicker sind als die Dicken (r) der Vertiefungen (15), die dicker sind als die Bezugsdicke.

3. Schutzmanschette (1) für ein Gleichlaufgelenk nach Anspruch 1 oder 2, bei dem der Faltenbalgabschnitt (13) sieben Erhebungen und sechs Vertiefungen besitzt, und die dritte Erhebung (16c) und Vertiefung (15c) ausgehend von dem Abschnitt (12) kleinen Durchmessers den Bezugswert bilden.

4. Schutzmanschette für ein Gleichlaufgelenk nach einem der Ansprüche 1 bis 3, bei dem die Dicken (m, r) der Erhebungen (16) und Vertiefungen (15) innerhalb eines Bereichs von 85% bis 115% zu- oder abnehmen.

5. Schutzmanschette (1) für ein Gleichlaufgelenk nach Anspruch 4, bei dem ein Unterschied zwischen den Dicken (m, r) zweier beliebig ausgewählter Erhebungen (16) und Vertiefungen (15) konstant gehalten wird, und die Dicken (m, r) der Erhebungen und Vertiefungen innerhalb des Bereichs von 85% bis 115% zu- oder abnehmen.

6. Schutzmanschette (1) für ein Gleichlaufgelenk (2) nach einem der Ansprüche 1 bis 5, bei dem ein Schutzmanschettenmaterial ein thermoplastisches Elastomer einer Esterkette, Olefinkette, Urethankette, Amidkette, Styrolkette und dergleichen ist.

**Revendications**

1. Soufflet en résine (1) destiné à un joint universel à vitesse constante (2) comprenant : une section de grand diamètre (11) qui peut être attachée à une section d'extrémité d'ouverture d'un composant de joint extérieur (4) d'un joint universel à vitesse constante (2), une section de petit diamètre (12) qui peut être attachée à un arbre (10) connecté à un composant de joint intérieur (6) du joint universel à vitesse constante (2), et une section soufflet (13) qui est disposée entre la section de grand diamètre (11) et la section de petit diamètre (12) et comporte des crêtes (16) et des vallées (15) disposées en alternance dans une direction axiale, dans lequel une crête (16g, 16a) est disposée adjacente à la section de grand diamètre (11) et à la section de petit diamètre (12),
**caractérisé en ce que**,
avec une crête et une vallée dans une section centrale de direction axiale comme référence, les épaisseurs (m, r) de crêtes (16) et de vallées (15) vers le côté section de petit diamètre des crête et vallée de référence sont plus minces qu'une épaisseur de référence des crête et vallée de référence, et les épaisseurs (m, r) de crêtes (16) et de vallées (15) vers le côté section de grand diamètre des crête et vallée de référence, à l'exception de l'épaisseur de la crête (16g) adjacente à la section de grand diamètre (11), sont plus épaisses que l'épaisseur de référence des crête et vallée de référence, et
l'épaisseur de la crête (16g) adjacente à la section de grand diamètre (11) est l'épaisseur de référence.

2.  Soufflet (1) destiné à un joint universel à vitesse constante selon la revendication 1, dans lequel les épaisseurs (m) des crêtes (16) plus épaisses que l'épaisseur de référence sont plus épaisses que les épaisseurs (r) des vallées (15) plus épaisses que l'épaisseur de référence.

3.  Soufflet (1) destiné à un joint universel à vitesse constante selon la revendication 1 ou 2, dans lequel la section de soufflet (13) comporte sept crêtes et six vallées, et les troisièmes crête (16c) et vallée (15c) à partir de la section de grand diamètre (12) sont la référence.

4.  Soufflet destiné à un joint universel à vitesse constante selon l'une quelconque des revendications 1 à 3, dans lequel les épaisseurs (m, r) des crêtes (16) et vallées (15) sont augmentées ou diminuées dans une plage de 85 % à 115 %.

5.  Soufflet (1) destiné à un joint universel à vitesse constante selon la revendication 4, dans lequel une différence entre les épaisseurs (m, r) de deux crêtes (16) et vallées (15) arbitrairement sélectionnées est maintenue constante, et les épaisseurs (m, r) des crêtes et vallées sont augmentées ou diminuées dans la plage de 85 % à 115 %.

6.  Soufflet (1) destiné à un joint universel à vitesse constante (2) selon l'une quelconque des revendications 1 à 5, dans lequel un matériau de soufflet est un élastomère thermoplastique d'une série ester, d'une série oléfine, d'une série uréthane, d'une série amide, d'une série styrène, et analogues.

Fig. 1

Fig. 2

**Fig. 3**

EP 1 925 838 B1

**Fig. 4**

**Fig. 5**

**EP 1 925 838 B1**

**REFERENCES CITED IN THE DESCRIPTION**

**Patent documents cited in the description**

- JP 2525619 B
- JP HEISEI710561 B
- JP HEISEI682463 B
- JP 2002257152 A
- JP HEISEI6129536 B
- JP HEISEI8135675 B
- JP HEISEI738758 B
- US 5645286 A
- DE 19844987 A1